# EUROPEAN PATENT APPLICATION

(11) **EP 4 650 164 A1**
(43) Date of publication of application: **19.11.2025**
(21) Application number: 24176448.9
(22) Date of filing: 16.05.2024
(51) Int. Cl.: B32B 5/02, B32B 5/26, B65D 85/804, B01D 39/18, B65D 65/46, D21H 27/08, B32B 7/12

(54) **MULTILAYER NON-WOVEN FABRIC SUITABLE AS LID OF A CAPSULE FOR PREPARING A BEVERAGE**

(71) Applicant: Glatfelter Gernsbach GmbH, 76593 Gernsbach (DE)
(72) Inventor: Ladanji, Dijana, 76593 Gernsbach (DE); Borner, Sebastian, 76332 Bad Herrenalb (DE); Seger, Bernd, 76332 Bad Herrenalb (DE); Kühn, Jörg, 76470 Ötigheim (DE)
(74) Representative: Lavoix

(57) **Abstract**

The present invention relates to a non-woven fabric (10) suitable as a lid of a capsule for preparing a beverage, in particular coffee or tea, the non-woven fabric (10) comprising a tear enhancement layer (20), an oxygen barrier layer (24), a retention filter layer (30), wherein the oxygen barrier layer (24) is arranged between the tear enhancement layer (20) and the retention filter layer (30), the non-woven fabric (10) further comprising at least one of a first adhesion layer (22), a second adhesion layer (26) and a water vapor barrier layer (28), wherein the first adhesion layer (22) is arranged between the tear enhancement layer (20) and the oxygen barrier layer (24), wherein the second adhesion layer (26) is arranged between the oxygen barrier layer (24) and the retention filter layer (30), wherein the water vapor barrier layer (28) is arranged between the oxygen barrier layer (24) and the retention filter layer (30). The present invention further relates to a lid for or of a capsule for preparing a beverage as well as to a capsule for preparing a beverage.

## Description

### FIELD OF THE INVENTION

The present invention relates to a multilayer non-woven fabric suitable as a lid of a capsule for preparing a beverage, such as coffee or tea, in particular a single-use or single-serve capsule having advantageous characteristics in terms of sustainability (such as natural basis and/or in particular biodegradability), brewing performance (such as pressure resistance and/or continuous brewing flow), sealing strength and/or barrier properties (in particular oxygen, aroma and/or water vapor barrier).

### BACKGROUND

Conventional single-use capsules used for preparing hot beverages, in particular coffee, are typically made from aluminum or plastic material, thus posing severe ecological problems. In particular, the lid of such capsules is often made from aluminum which exhibits excellent barrier properties and can be appropriately punched in a so-called portion coffee machine or capsule coffee brewing machine.

During the last years, the environmental aspect of the end-of-life of single use consumer goods became more and more important for the general public, as well as for brand owners and legislative bodies. Therefore, it became more and more important for brand owners to offer more sustainable product ranges, allowing customers to minimize their environmental footprint.

Previous attempts in this regard include the following: US 2011/0259205 A1 proposes a capsule system comprising a paper-based wall with wax coating to form a biodegradable alternative for single use beverage pods. US 8656827 B2 proposes a capsule system which is not harmful for the environment and employs compostable materials, such as polylactic acid (PLA). WO 2008/148650 A1 outlines a coffee capsule system based on polypropylene (PP) and an EVOH gas barrier layer. US 2018/0362198 A1 proposes a capsule system employing a bicomponent PLA fiber to be used in a nonwoven filter for coffee and tea applications. EP 3221238 B1 proposes a capsule system based on a cellulose based capsule body and a sealing film made of edible material containing alginic acid/alginate. WO 2017/144009 A1 proposes to make a consumer product, such as a coffee capsule, by a material comprising a pulp and a fibrillated cellulose, wherein the pulp and the fibrillated cellulose are independently derived from a plant fiber, and optionally an additional polymer. WO 2020/224952 A1 proposes a capsule, in particular for preparing a beverage from beverage powder, comprising a capsule body composed of at least one polysaccharide and filled with a material containing polysaccharide, the capsule body being entirely encased by at least one coating layer comprising at least one polyvinyl alcohol and/or a polyvinyl alcohol copolymer. FR 3 035 085 A1 proposes a capsule comprising a hollow body capable of receiving an ingredient, wherein the body comprises a side wall that is closed by a bottom at a first end, and bordered by a flange at a second end, and a cover attached to the flange to close said second end of the side wall, characterized in that the cover is composed of at least one paper membrane covered with at least 5 g/m² of a layer of resin which comprises one or more initiators of rupture, so that the resin layer is positioned between said paper membrane and the body. US 2021/0171739 A1 proposes to make an article, for instance a beverage pod, from a polymer composition comprising a cellulose acetate, at least one bio-based polymer comprising a polylactic acid, a polycaprolactone, or a polyhydroxyalkanoate, and a plasticizer. WO 2017/063680 A1 discloses a capsule for preparing beverages comprising a housing having a peripheral wall and a bottom wall, and a closing element composed of a laminated foil comprising a weakened layer, a carrier layer at least partially composed of paper, and an oxygen barrier layer. WO 2023/285655 A1 discloses a capsule for preparing a beverage, the capsule comprising one or more fiber layers comprising fibers, and one or more polymer layers comprising a polymer selected from the group consisting of polylactic acid (PLA), polybutylene succinate (PBS), polybutylene adipate terephthalate (PBAT), polyhydroxyalkanoate (PHA), and a polysaccharide, wherein the capsule comprises a bottom, a side wall and a lid, wherein the bottom and the side wall are made of the same material and the lid is made of another material, wherein the bottom and the side wall each comprise one or more fiber layers comprising fluff pulp.

However, previous attempts have so far not been fully satisfying concerning a substantially complete biodegradability and at the same time exhibiting appropriate mechanical properties and barrier properties of a capsule for preparing a beverage, in particular as regards the lid of the capsule.

Thus, there is still room for further improvements in providing a biodegradable capsule, in particular the lid thereof, suitable for preparing a hot beverage.

### OBJECT OF THE INVENTION

The present invention aims at overcoming the above described problems and drawbacks. Thus, it is an object of the present invention to provide a material suitable as a lid of a capsule for preparing a (hot) beverage, such as coffee or tea, that can substantially entirely biodegrade after use and is substantially based on natural materials (i.e. biobased) and at the same time exhibits appropriate brewing performance and mechanical properties (such as sufficient pressure resistance, sealing strength and/or a continuous brewing flow) as well as barrier properties (in particular in terms of oxygen, aroma, and/or water vapor).

### SUMMARY OF THE INVENTION

The present inventors have made diligent studies and have found that this object can be solved by a non-woven-fabric having a specific multilayer set-up. In particular, different fiber-based layers comprising fibers with different fiber lengths and/or freeness values (beating degrees) as well as one or more biopolymer-based layers are combined and arranged in a specific order. Without wishing to be bound to any theory, the present inventors assume that the combination of such different fiber-based layers comprising fibers with different fiber lengths and/or freeness values as well as one or more biopolymer-based layers provide for sufficient mechanical strength and barrier properties as well as good brewing performance, even though the materials are substantially biodegradable.

Accordingly, the present invention relates to a (multilayer) non-woven fabric (suitable as a lid of a capsule for preparing a beverage, in particular coffee or tea) comprising a tear enhancement layer, an oxygen barrier layer, a retention filter layer, wherein the oxygen barrier layer is arranged between the tear enhancement layer and the retention filter layer, wherein the non-woven fabric further comprises at least one of a first adhesion layer, a second adhesion layer and a water vapor barrier layer, wherein the first adhesion layer is arranged between the tear enhancement layer and the oxygen barrier layer, wherein the second adhesion layer is arranged between the oxygen barrier layer and the retention filter layer, wherein the water vapor barrier layer is arranged between the oxygen barrier layer and the retention filter layer (or between the second adhesion layer (if present) and the retention filter layer).

The present invention further relates to a lid for or of (in particular suitable for closing) a capsule for preparing a beverage, in particular coffee or tea, the lid comprising or consisting of a non-woven fabric as described herein.

Still further, the present invention relates to the use of a non-woven fabric as described herein as a lid for of (in particular suitable for closing) a capsule for preparing a beverage, in particular coffee or tea.

Moreover, the present invention relates to a capsule for preparing a beverage, in particular coffee or tea, the capsule comprising a capsule main body comprising a bottom and a side wall; and a lid as described herein, wherein the lid closes (seals) an opening of the capsule main body.

Other objects and many of the attendant advantages of embodiments of the present invention will be readily appreciated and become better understood by reference to the following detailed description of embodiments and the accompanying drawings.

### BRIEF DESCRIPTION OF THE DRAWINGS

Fig. 1 schematically illustrates a non-woven fabric according to an exemplary embodiment in a cross-sectional view.
Figs. 2A and 2B schematically illustrate a non-woven fabric according to an exemplary embodiment in a cross-sectional view, prior to be being punched by a punch member of a portion coffee machine (Fig. 2A) and while being partly punched by a punch member of a portion coffee machine (Fig. 2B).
Figs. 3A to 3E schematically illustrate non-woven fabrics according to further exemplary embodiments in a cross-sectional view.

### DETAILLED DESCRIPTION OF THE INVENTION

Hereinafter, details of the present invention and other features and advantages thereof will be described. However, the present invention is not limited to the following specific descriptions, but they are rather for illustrative purposes only. It should be noted that features described in connection with one exemplary embodiment or exemplary aspect may be combined with any other exemplary embodiment or exemplary aspect, in particular features described with any exemplary embodiment of a non-woven fabric may be combined with any other exemplary embodiment of a non-woven fabric, with any exemplary embodiment of a lid, with any exemplary embodiment of a capsule and vice versa, unless specifically stated otherwise.

Where an indefinite or definite article is used when referring to a singular term, such as "a", "an" or "the", a plural of that term is also included and vice versa, unless specifically stated otherwise, whereas the word "one" or the number "1", as used herein, typically means "just one" or "exactly one".

The expression "comprising", as used herein, includes not only the meaning of "comprising", "including" or "containing", but may also encompass "consisting essentially of" and "consisting of".

In a first aspect, the present invention relates to a non-woven fabric, more specifically a non-woven fabric suitable as a lid of a capsule for preparing a (hot) beverage, in particular coffee or tea. To this end, a capsule typically comprises a capsule main body, in particular a bottom (or bottom disk) and a side wall, and a lid (or cover) and the capsule may be filled with a soluble or brewable food, such as coffee or tea powder. The capsule may in particular be a single-use capsule or a single-serve capsule, i.e. supposed to be used only once and disposed after use. For such disposable article, biodegradability is of utmost importance to avoid large amounts of waste that is hardly recyclable, all the more when filled with (leached) coffee or tea powder residues. In particular, the material of a conventional lid typically comprises aluminum (for instance a composite material comprising aluminum) and may therefore not be biodegradable. In contrast, a lid according to an embodiment of the present invention, and preferably also the entire capsule according to an embodiment of the present invention, may be (substantially completely) biodegradable and may therefore be disposed even when filled with (leached) coffee or tea powder residues entirely as organic waste or even at a home compost. Moreover, the non-woven fabric as well as the lid according to an embodiment of the present invention, and preferably also the entire capsule may be substantially made of biobased materials.

The term "non-woven fabric", as used herein, may in particular mean a web of individual fibers which are at least partially intertwined, but not in a regular manner as in a knitted or woven fabric.

The term "biobased" (which may also be referred to as "bio-derived" or as "natural"), as used herein, may in particular mean that the material concerned, such as the fibers, the polymer or the entire non-woven fabric or even the entire capsule, can be derived from material of biological or natural origin, in particular from plants or other renewable entities, rather than fossil sources.

The term "biodegradable" which may also be referred to as "compostable", as used herein, may in particular mean that the material concerned, such as the fibers, the polymer or the entire non-woven fabric or even the entire capsule, complies at least with the requirements for industrial compostability, for instance in accordance with at least one of EN 13432, EN 14995, ASTM D5988-18, ASTM D6400-19 and ASTM D6868-19, and preferably also with the requirements for home compostability, for instance in accordance with draft prEN 17427, and may preferably also be marine biodegradable, for instance in accordance with ASTM D6691-17.

In particular, the non-woven fabric is a multilayer non-woven fabric. Thus, the non-woven fabric comprises at least two different (separate, distinct) layers, which may be distinguished from each other, for instance visually by means of a microscope in a cross-sectional view of the non-woven fabric. The non-woven fabric may in particular comprise at least two, in particular at least three, fiber layers and one or more polymer layers. At least one polymer layer may be arranged between two fiber layers and may serve to improve the adhesion between the two fiber layers and/or may provide for additional barrier characteristics.

The non-woven fabric comprises a tear enhancement layer, an oxygen barrier layer and a retention filter layer, wherein the oxygen barrier layer is arranged between the tear enhancement layer and the retention filter layer. When used as a lid of a capsule for preparing a beverage, the non-woven fabric is typically arranged such that the retention filter layer faces the interior of the capsule typically containing a soluble or brewable food to be protected from the surroundings, whereas the tear enhancement layer faces outwards, i.e. towards the surroundings or atmosphere.

The term "tear enhancement layer", as used herein, may in particular mean a layer that exhibits an appropriate tear performance, a specific particle retention and punchability by a punch member of a portion coffee machine (capsule coffee brewing machine). The tear enhancement layer may in particular provide tear resistance to the non-woven fabric. In addition, the tear enhancement layer may also exhibit sealability to the oxygen barrier layer, in particular in case an adhesion layer therebetween, such as the first adhesion layer to be described in further detail below, is omitted.

In an embodiment, the tear enhancement layer comprises fibers. In particular, the tear enhancement layer may comprise fibers selected from the group consisting of pulp fibers, cellulosic fibers and biobased polymer fibers.

The pulp fibers may in particular comprise wood pulp fibers, such as softwood and/or hardwood pulp. Wood pulp may in particular denote a (lignocellulosic) fibrous material prepared by chemically or mechanically separating cellulose fibers from wood, such as by a kraft process (sulfate process). Kraft wood pulp may include northern bleached softwood kraft (NBSK) and southern bleached softwood kraft (SBSK) as well as their unbleached variants. The pulp fibers may also comprise specialty pulp fibers. The term "specialty pulp fibers", as used herein, may in particular denote fibers obtained from annual plants and may include hemp fibers, manila fibers, jute fibers, sisal fibers, abaca fibers or combinations thereof. The specialty pulp fibers may in particular comprise abaca fibers or sisal fibers. Thus, the pulp fibers are preferably natural pulp fibers. The pulp fibers, such as wood pulp and/or specialty pulp fibers, may have a fiber coarseness of from 0.3 to 3.5 dtex, such as from 0.6 to 2.5 dtex.

The cellulosic fibers may in particular comprise regenerated cellulose fibers, such as lyocell or viscose. The term "regenerated cellulose fibers", as used herein, may in particular denote man-made cellulose fibers obtained by a solvent spinning process. In an embodiment, the regenerated cellulose fibers may be selected from the group consisting of viscose (rayon) or lyocell (tencel). Viscose is a type of solvent spun fiber produced according to the viscose process typically involving an intermediate dissolution of cellulose as cellulose xanthate and subsequent spinning to fibers. Lyocell is a type of solvent spun fiber produced according to the aminoxide process typically involving the dissolution of cellulose in N-methylmorpholine N-oxide and subsequent spinning to fibers.

The biobased polymer fibers may in particular comprise thermoplastic biodegradable fibers. The term "thermoplastic biodegradable fibers", as used herein, may in particular denote biodegradable fibers that soften and/or partly and/or fully melt when exposed to heat and are capable to bind with each other or to other non-thermoplastic fibers, such as cellulosic fibers or pulp fibers, upon cooling and resolidifying. For example, the thermoplastic biodegradable fiber may be selected from the group consisting of a polylactic acid (PLA), a polybutylene succinate (PBS), a polybutylene adipate terephthalate (PBAT), a polyhydroxyalkanoate (PHA) and copolymers of PHA, and other fibers made of biodegradable thermoplastic polymers. Combinations of two or more thereof may also be applied. In an embodiment, the thermoplastic biodegradable fiber comprises polylactic acid (PLA) fibers. When using biobased polymer fibers, in particular thermoplastic biodegradable fibers, the layer concerned, such as the tear enhancement layer or the retention filter layer to be described in further detail below, may be imparted with sealability properties, in particular heatsealability, which may allow that an adhesion layer, such as the first adhesion layer or the second adhesion layer to be described in further detail below, may be omitted.

In an embodiment, the thermoplastic biodegradable fiber comprises a multicomponent fiber, in particular a bicomponent fiber, such as bicomponent fibers of the sheath-core type. Bicomponent fibers are composed of two sorts of polymers having different physical and/or chemical characteristics, in particular different melting characteristics. A bicomponent fiber of the sheath-core type typically has a core of a higher melting point component and a sheath of a lower melting point component. The presence of thermoplastic biodegradable fibers, such as multicomponent fibers, may in particular be advantageous for improving the mechanical properties, such as the mechanical strength, and/or sealability properties of the fiber layer(s).

In an embodiment, the tear enhancement layer comprises fibers selected from the group consisting of (long) softwood pulp fibers, in particular having an average (weight weighted) fiber length of from 2.5 to 3.5 mm, specialty pulp fibers, such as abaca or sisal fibers, in particular having an average (weight weighted) fiber length of from 3.5 to 5.5 mm, and regenerated cellulose fibers, such as lyocell or viscose, in particular having an average (weight weighted) fiber length of from 4 to 10 mm. By using such relatively long fibers, the tear properties may be enhanced so that the layers underneath the tear enhancement layer may be protected from tearing after being punched by a punch member of a portion coffee machine.

The tear enhancement layer may be prepared by any one of airlaid, wetlaid, spunbond, spunlace and/or meltblown technology. In particular, the tear enhancement layer may be prepared by wetlaid technology, in particular a layer of wet-laid (natural) pulp fibers.

The term "oxygen barrier layer", as used herein, may in particular mean a layer that exhibits appropriate barrier properties, in particular with regard to oxygen, but may also provide barrier properties with regard to aroma and/or water vapor, in particular in case a separate water vapor barrier layer to be described in further detail below, is omitted. In addition, the oxygen barrier layer is generally punchable by a punch member of a portion coffee machine (capsule coffee brewing machine).

In an embodiment, the oxygen barrier layer comprises fibers, in particular natural fibers. In particular, the oxygen barrier layer may comprise wood pulp fibers, such as softwood and/or hardwood pulp fibers. For further details about the wood pulp fibers, reference is made to the description thereof in the context of the tear enhancement layer.

In an embodiment, the oxygen barrier layer comprises highly refined natural fibers, in particular having a (Schopper Riegler) freeness value (which may also be referred to as a drainage index or beating degree) of from 65 to 95 °SR, such as from 70 to 90 °SR. Such highly refined or highly beaten natural fibers may be advantageous for enhancing the barrier properties, in particular with regard to oxygen, and may impart a glassine-like appearance to the oxygen barrier layer. Conventional refining equipment, such as beaters, conical or disk refiners, may be used to adapt the drainage index to the desired value. The freeness value may be determined in accordance with DIN ISO 5267-1.

In an embodiment, the oxygen barrier layer further comprises an additive, in particular a wet-strength agent and/or a hydrophobicity agent. By taking this measure, the mechanical properties, such as wet strength, and/or the barrier properties, for instance with regard to water vapor, may be enhanced.

The term "wet-strength agent", as used herein, may in particular denote an agent that improves the tensile strength of the layer or the entire non-woven fabric in the wet state. While it may be preferred that the wet-strength agent is biodegradable, it may also be possible to use a non-biodegradable wet-strength agent (for instance in small amounts not negatively impacting the biodegradability/compostability). A suitable example of the wet-strength agent may include an epichlorhydrine resin, such as a polyamine-polyamide-epichlorohydrine resin.

The term "hydrophobicity agent", as used herein, may in particular denote an agent that increases the hydrophobicity, such as a wax, which may impart waterrepelling properties and/or enhance barrier properties with regard to water vapor.

In an embodiment, the oxygen barrier layer comprises (for instance may be coated with) a coating comprising micro fibrillated cellulose (MFC). In particular, the MFC may be crosslinked by a crosslinker, such as a wet-strength agent and/or citric acid. By taking this measure, the barrier properties (in particular oxygen, aroma and/or water vapor barrier) of the oxygen barrier layer may be further enhanced.

The term "retention filter layer", as used herein, may in particular mean a layer that exhibits appropriate tear properties, a specific particle retention and is stable against being punched (i.e. non-punchable) by a punch member of a portion coffee machine (capsule coffee brewing machine). The retention filter layer may in particular provide a filter function during the brewing process in the portion coffee machine. In addition, the retention filter layer may also exhibit sealability to the oxygen barrier layer or to the water vapor barrier layer, in particular in case an adhesion layer therebetween, such as the second adhesion layer to be described in further detail below, is omitted.

In an embodiment, the retention filter layer comprises fibers. In particular, the retention filter layer may comprise fibers selected from the group consisting of pulp fibers, cellulosic fibers and biobased polymer fibers.

The pulp fibers may in particular comprise wood pulp fibers, such as softwood and/or hardwood pulp. The pulp fibers may also comprise specialty pulp fibers, in particular abaca fibers or sisal fibers. Thus, the pulp fibers are preferably natural pulp fibers. The cellulosic fibers may in particular comprise regenerated cellulose fibers, such as lyocell or viscose. The biobased polymer fibers may in particular comprise thermoplastic biodegradable fibers, such as polylactic acid (PLA) fibers. For further details about the pulp fibers, the cellulosic fibers and the biobased polymer fibers, reference is made to the description thereof in the context of the tear enhancement layer.

In an embodiment, the retention filter layer comprises fibers having a (Schopper Riegler) freeness value of from 20 to 40 °SR, in particular from 20 to 35 °SR. Such low freeness value may be advantageous in that the retention filter layer may exhibit excellent elongation properties to resist puncture forces by punch members of a portion coffee machine. In addition, the adhesion of the retention filter layer to the overlying layer, such as the oxygen barrier layer, the second adhesion layer or the water vapor barrier layer, may be loosened by such punch members. Conventional refining equipment, such as beaters, conical or disk refiners, may be used to adapt the drainage index to the desired value. The freeness value may be determined in accordance with DIN ISO 5267-1.

The retention filter layer may be prepared by any one of airlaid, wetlaid, spunbond, spunlace and/or meltblown technology. In particular, the retention filter layer may be prepared as a single layer separately from the other layers and loosely bonded to the overlying layer, such as the oxygen barrier layer, the second adhesion layer or the water vapor barrier layer, by sealing and/or mechanical point/linear bonding. By taking this measure, it may be achieved that the retention filter layer gets not punched by the punch members of a portion coffee machine in the brewing process, even though the overlying layers are punched.

The non-woven fabric further comprises at least one of a first adhesion layer, a second adhesion layer and a water vapor barrier layer, wherein the first adhesion layer is arranged between the tear enhancement layer and the oxygen barrier layer, wherein the second adhesion layer is arranged between the oxygen barrier layer and the retention filter layer, wherein the water vapor barrier layer is arranged between the oxygen barrier layer and the retention filter layer (or between the second adhesion layer (if present) and the retention filter layer).

The term "adhesion layer", as used herein, such as the first adhesion layer and the second adhesion layer, may in particular mean a layer that exhibits sealing and/or adhesion properties as well as punchability by a punch member of a portion coffee machine (capsule coffee brewing machine). In particular, the first adhesion layer may exhibit sealability and/or adhesion to the tear enhancement layer and/or to the oxygen barrier layer. As a result, the first adhesion layer may serve to stick the tear enhancement layer and the oxygen barrier layer together. Similarly, the second adhesion layer may exhibit sealability and/or adhesion to the oxygen barrier layer and/or to the retention filter layer or the water vapor barrier layer (if present). As a result, the first adhesion layer may serve to stick the oxygen barrier layer and the retention filter layer or the water vapor barrier layer (if present) together.

In an embodiment, the first adhesion layer and/or the second adhesion layer comprises a biopolymer. The term "biopolymer", as used herein, may in particular mean a biobased polymer, i.e. a polymer derived from material of biological or natural origin, in particular from plants or other renewable entities, rather than fossil sources. In addition, the biopolymer may also be biodegradable. The biopolymer may be applied (such as sprayed) in the form of a water-based solution or dispersion. The biopolymer may also be applied as a biopolymer film, for instance by direct extrusion or lamination.

In an embodiment, the biopolymer is selected from the group consisting of polyhydroxyalkanoate (PHA), polybutylene adipate terephthalate (PBAT), polycaprolactone (PCL), polylactic acid (PLA), thermoplastic starch (TPS) or any blend thereof.

In an embodiment, the first adhesion layer and/or the second adhesion layer further comprises (natural) fibers. By taking this measure, the first adhesion layer and/or the second adhesion layer may be imparted with barrier properties or the barrier properties of the first adhesion layer and/or the second adhesion layer may be enhanced. In particular, highly refined natural fibers having a (Schopper Riegler) freeness value of from 65 to 95 °SR and/or micro fibrillated cellulose (MFC) may be particularly suitable. MFC may be crosslinked by a crosslinker, such as a biopolymer and/or citric acid.

The term "water vapor barrier layer", as used herein, may in particular mean a layer that exhibits appropriate barrier properties, in particular with regard to water vapor. In addition, the water vapor barrier layer may exhibit sealing and/or adhesion properties, in particular to the oxygen barrier layer and/or to the retention filter layer so that the second adhesion layer may become dispensable. Moreover, the water vapor barrier layer is generally punchable by a punch member of a portion coffee machine (capsule coffee brewing machine).

In an embodiment, the water vapor barrier layer comprises a biopolymer film, i.e. a film comprising or made of a biopolymer. Suitable examples of the biopolymer include polyhydroxyalkanoate (PHA), polybutylene adipate terephthalate (PBAT), polycaprolactone (PCL), polylactic acid (PLA), thermoplastic starch (TPS) or any blend thereof. The biopolymer film may further comprise a biodegradable binder, such as carboxymethyl cellulose (CMC) and citric acid. The biopolymer film may be applied by direct extrusion or lamination.

In an embodiment, the individual layers of non-woven fabric have a grammage or basis weight as described below. The grammage or basis weight may be determined in accordance with TAPPI T 410 (om-19).

The tear enhancement layer may have a basis weight in a range of from 15 to 50 g/m², in particular in a range of from 20 to 40 g/m², in particular in a range of from 25 to 30 g/m².

The first adhesion layer may have a basis weight in a range of from 2 to 15 g/m², in particular in a range of from 7 to 12 g/m².

The oxygen barrier layer may have a basis weight in a range of from 20 to 80 g/m², in particular in a range of from 25 to 70 g/m², in particular in a range of from 30 to 60 g/m².

The second adhesion layer may have a basis weight in a range of from 2 to 15 g/m², in particular in a range of from 7 to 12 g/m².

The water vapor barrier layer may have a basis weight in a range of from 10 to 50 g/m², in particular in a range of from 15 to 30 g/m².

The retention filter layer may have a basis weight in a range of from 5 to 50 g/m², in particular in a range of from 7 to 40 g/m², in particular in a range of from 10 to 30 g/m².

In an embodiment, the tear enhancement layer, the oxygen barrier layer and the at least one of a first adhesion layer, a second adhesion layer and a water vapor barrier layer are (configured to be) punchable (pierceable) by a punch member (in particular any 3D structure, such as needle, pyramid, truncated pyramid) of a portion coffee machine (capsule coffee brewing machine) and the retention filter layer is (configured to be) non-punchable by a punch member of a portion coffee machine (capsule coffee brewing machine).

In an embodiment, the non-woven fabric is substantially free of metals, such as aluminum, and of synthetic polymer materials, such as synthetic fibers/polymers comprising PE, PP or PET. Rather, the non-woven fabric may be substantially made of biobased materials.

In an embodiment, the non-woven fabric (such as the entire non-woven fabric material) is biodegradable. In an embodiment, the non-woven fabric complies with the requirements of EN 13432 and preferably with home compostability conditions.

In an embodiment, the non-woven fabric has a gas transmission rate (gas permeability), in particular an oxygen transmission rate (oxygen permeability), at 23°C and a relative humidity of 50% of from 1 to 500 cm³/(m² d bar), such as from 2 to 400 cm³/(m² d bar), as determined in accordance with DIN 53380-3:1998-07.

In an embodiment, the non-woven fabric has a water vapor transmission rate (water vapor permeability) at 23°C and a relative humidity of 50% of from 15 to 100 g/(m² d), such as from 20 to 80 g/(m² d), as determined in accordance with ISO 7783:2018.

In an embodiment, the non-woven fabric has a water vapor transmission rate (water vapor permeability) at 23°C and a relative humidity of 85% of from 20 to 250 g/(m² d), such as from 25 to 200 g/(m² d), as determined in accordance with ISO 7783:2018.

Having the above gas and/water transmission rates, the non-woven fabric may provide a lid for capsule that is sufficiently water- and/or gas-tight to allow that an additional (secondary or outer) packaging of the capsule becomes dispensable, which is highly advantageous from an ecological point of view.

The non-woven fabric may be prepared in that all the layers are prepared separately and are subsequently combined. It is however also possible to prepare two or more layers, for instance three layers or even four or more layers by using the same apparatus, in particular the same paper machine. To this end, a duplex paper machine may be used enabling the formation of two fiber layers, such as the tear enhancement layer and the oxygen barrier layer, and additionally the on-line application, for instance by spraying and/or coating, of two or more polymer layers, such as the first and/or the second adhesion layer on both sides of the duplex paper. Subsequently, a water vapor barrier layer may be formed by applying a biopolymer film by direct extrusion or lamination. The retention filter layer is preferably separately formed and loosely combined to the overlying layer, such as the oxygen barrier layer, the second adhesion layer or the water vapor barrier layer, by sealing and/or mechanical point/linear bonding.

In general, the fiber layers, such as the tear enhancement layer, the oxygen barrier layer and/or the retention filter layer, may be prepared by any one of airlaid, wetlaid, spunbond, spunlace and/or meltblown technology. In particular, the fiber layers, such as the tear enhancement layer, the oxygen barrier layer and/or the retention filter layer, may be prepared by a wet-laid process, for instance by a conventional paper-making process using a wet-laid machine, in particular by means of an inclined wire papermaking machine, as described for instance in US 3,785,922, the disclosure of which is incorporated herein by reference, or a fourdrinier paper machine. Thus, the fiber layers may be wet-laid layers. Additionally or alternatively, at least one of the fiber layers, such as the tear enhancement layer, the oxygen barrier layer and/or the retention filter layer, may be prepared by an air-laid process, for instance by a dry-forming airlaid non-woven manufacturing process, described for instance in US 3,905,864, the disclosure of which is incorporated herein by reference.

In a second aspect, the present invention relates to a lid for or of (in particular suitable for closing) a capsule for preparing a beverage, in particular coffee or tea, the lid comprising or consisting of a non-woven fabric as described herein.

Thus, the non-woven fabric as described in the context of the first aspect may be used as a lid for (of) (in particular suitable for closing or sealing) a capsule for preparing a beverage, in particular coffee or tea.

The term "lid", as used herein, may in particular mean a typically plain and diskshaped cover suitable for closing or sealing a capsule main body of a capsule for preparing a beverage, in particular coffee or tea.

In a third aspect, the present invention relates to a capsule for preparing a beverage, in particular coffee or tea.

The term "capsule", as used herein, may in particular mean a container or closed pod that is adapted to accommodate soluble or brewable food, such as coffee or tea powder, and allows for preparing a beverage, such as a hot beverage. To this end, a capsule typically comprises a capsule main body, in particular a bottom (or bottom disk) and a side wall, and a lid (or cover), and the capsule may for instance be inserted in a capsule coffee brewing machine, where brewing is achieved by insertion of a hot water injection needle tube pricking a hole in the lid material and, concurrently, insertion of a coffee liquid outlet tube creating a hole in the bottom disk material.

The capsule comprises a capsule main body comprising a bottom and a side wall. The capsule further comprises a lid as described herein, wherein the lid closes an opening of the capsule main body.

In an embodiment, the bottom and the side wall of the capsule main body are made of the same material, which in turn may also be the same as the nonwoven fabric constituting the lid, but may also be differently. Preferably the capsule main body is made of biobased and/or biodegradable material(s). Suitable examples of the materials for the bottom and the side wall of the capsule main body are disclosed in WO 2023/285655 A1, the disclosure of which is incorporated herein by reference.

In an embodiment, the capsule is particularly well suited for hot beverage preparation, in particular under a certain elevated pressure that may build up upon brewing. The capsule may be filled with soluble or brewable food, such as tea or coffee powder, and may be designed to be inserted in a capsule coffee brewing machine, where brewing is achieved by insertion of a hot water injection needle tube pricking a hole in the lid material of the capsule and, concurrently, insertion of a coffee liquid outlet tube creating a hole in the bottom disk material of the capsule.

In an embodiment, the capsule may be prepared by forming a bottom, a side wall and a lid separately from each other, for instance by (die) cutting or punching (stamping) the individual parts from a sheet of a composite of fiber layer(s) and polymer layer(s), followed by assembling the capsule by combining, such as by (heat-)sealing, the bottom part and the side wall part and subsequently (in particular after having inserted a soluble or brewable food) also the lid part.

In another embodiment, the capsule may be prepared by molding a structure comprising a bottom and a side wall by deep-drawing or punch drawing. To this end, the capsule material, in particular the fiber layer(s), advantageously exhibits a high stretchability or tensile strength. Subsequently, in particular after having inserted a soluble or brewable food, the molded structure may be closed by (heat-)sealing with a lid.

The present invention is further described by the following drawings, which are solely for the purpose of illustrating specific embodiments, and are not construed as limiting the scope of the invention in any way.

### DETILED DESCRIPTION OF THE DRAWINGS

The illustration in the drawings is schematical and not necessarily drawn to scale. In different drawings, similar or identical elements are provided with the same reference signs.

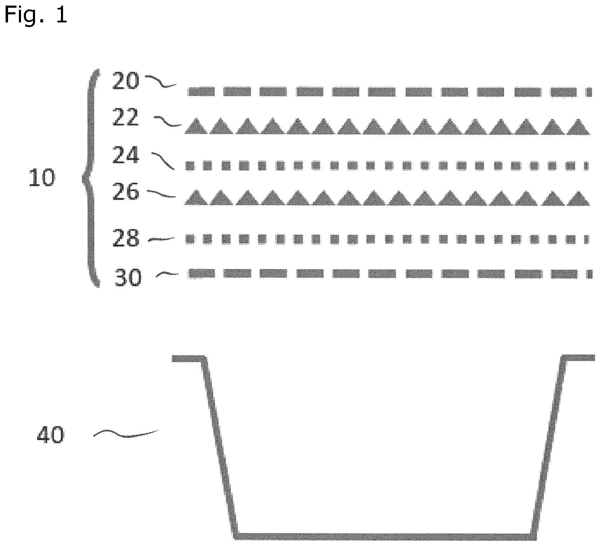

**Fig. 1** schematically illustrates a non-woven fabric according to an exemplary embodiment in a cross-sectional view.

Fig. 1 shows a capsule main body 40 as well as a non-woven fabric 10 in an exploded view so that the individual layers constituting the non-woven fabric 10 are shown separately, even though they are actually arranged adjacently to each other in the non-woven fabric 10 when used as a lid for covering the capsule main body 40.

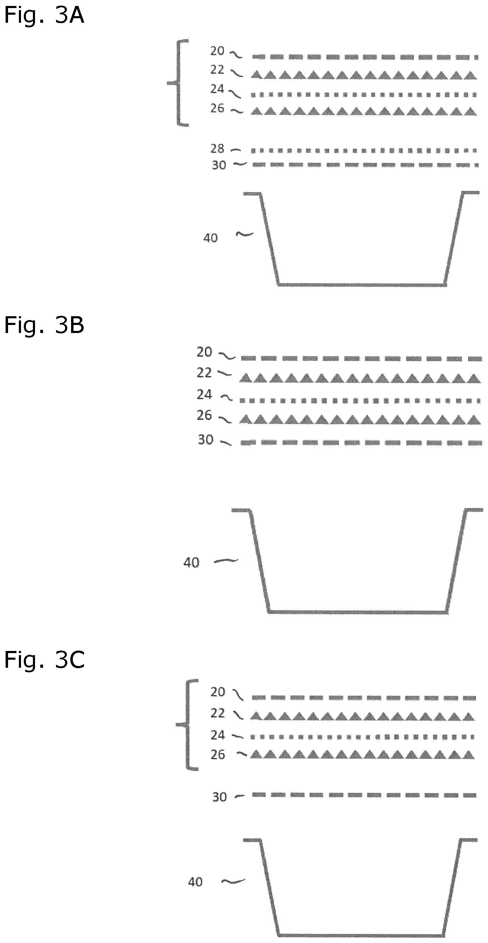

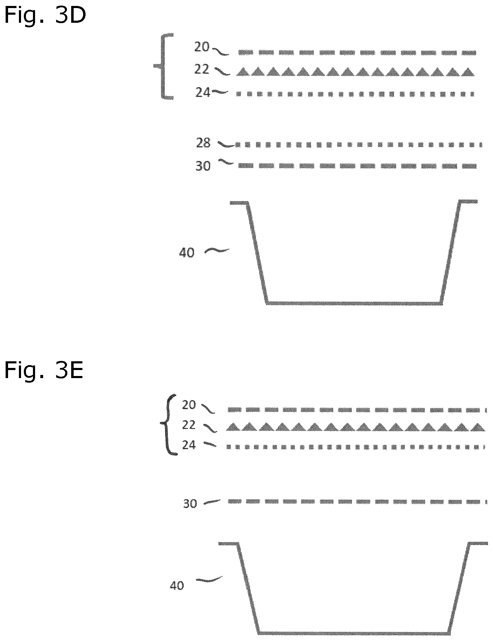

The non-woven fabric 10 as shown in Fig. 1 comprises a tear enhancement layer 20, a first adhesion layer 22, an oxygen barrier layer 24, a second adhesion layer 26, a water vapor barrier layer 28 and a retention filter layer 30. The first adhesion layer 22 is arranged between the tear enhancement layer 20 and the oxygen barrier layer 24. The second adhesion layer 26 and the water vapor barrier layer 28 are both arranged between the oxygen barrier layer 24 and the retention filter layer 30, wherein the second adhesion layer 26 faces is adjacent to the oxygen barrier layer 24 and the water vapor barrier layer 28 is adjacent to the retention filter layer 30. However, the order of the layers may also be varied and some of the layers may also be omitted, as discussed for instance below with regard to Fig. 3.

The tear enhancement layer 20, the oxygen barrier layer 24 and/or the retention filter layer 30 may in particular be fiber layers, i.e. layers comprising fibers as a main constituent, whereas the first adhesion layer 22, second adhesion layer 26 and/or the water vapor barrier layer 28 may in particular be polymer-based layers, i.e. layers comprising a polymer, more specifically a biopolymer, as a main constituent.

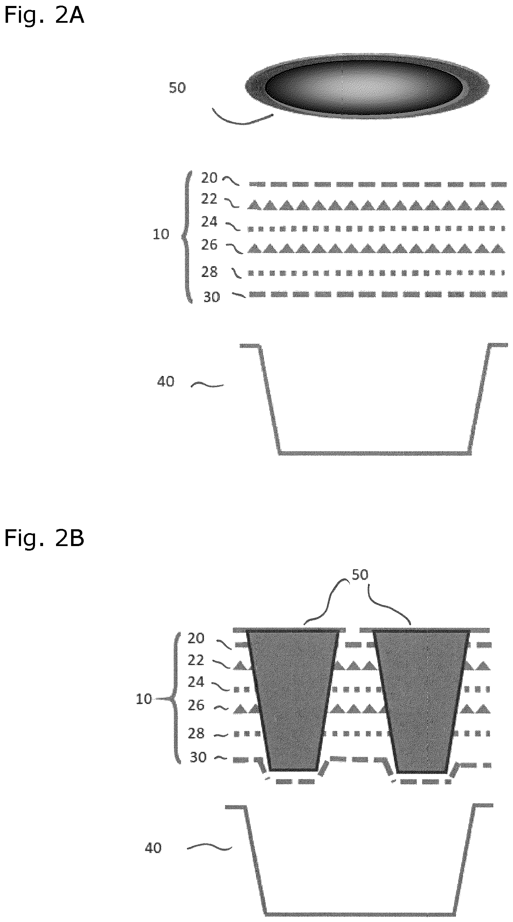

**Figs. 2A and 2B** schematically illustrate a non-woven fabric according to an exemplary embodiment in a cross-sectional view, prior to be being punched by a punch member of a portion coffee machine (Fig. 2A) and while being partly punched by a punch member of a portion coffee machine (Fig. 2B).

In Fig. 2A, a non-woven fabric 10, for instance the non-woven fabric 10 as shown in Fig. 1, is placed underneath a punch member 50 of a portion coffee machine. In the depicted embodiment, the punch member is embodied as a sieve having a plurality of three-dimensional structures extending towards the non-woven fabric 10. The three-dimensional structures may have any shape suitable for punching a lid of a of a capsule for preparing a beverage. For instance, the three-dimensional structures of the punch member 50 may have the shape of a needle, a pyramid, a truncated pyramid, a cone or a truncated cone.

In Fig. 2B, the non-woven fabric 10 is partly punched by the punch member 50, as it typically happens in a portion coffee machine prior to the brewing process. As can be seen in Fig. 2B, the tear enhancement layer 20, the first adhesion layer 22, the oxygen barrier layer 24, the second adhesion layer 26 and the water vapor barrier layer 28 are completely punched or penetrated by the punch member 50, whereas the retention filter layer 30 is resistant to the puncture force exerted by the punch member 50. As a result, the retention filter layer 30 remains substantially intact and may provide a filter function (including retention of solid particles) during the brewing process in the portion coffee machine. Without wishing to be bound by any theory, the inventors currently assume that the resistance of the retention filter layer 30 to the forces exerted by the punch member 50 may be due - on the one hand - because the retention filter layer may comprise (gently beaten) fibers having a freeness value of from 20 to 40 °SR, which may result in excellent elongation properties of the retention filter layer 30, and/or - on the other hand - because the retention filter layer may be prepared as a single layer separately from the other layers and only loosely bonded to the overlying layer, such as the water vapor barrier layer 28, by sealing and/or mechanical point/linear bonding.

**Figs. 3A to 3E** schematically illustrate non-woven fabrics according to further exemplary embodiments in a cross-sectional view.

Fig. 3A shows a 6-layer non-woven fabric 10 comprising a tear enhancement layer 20, a first adhesion layer 22, an oxygen barrier layer 24, a second adhesion layer 26, a water vapor barrier layer 28 and a retention filter layer 30. The tear enhancement layer 20, the first adhesion layer 22, the oxygen barrier layer 24 and the second adhesion layer 26 are prepared by using the same apparatus, in particular the same paper machine, as indicated by the brace symbol "{". To this end, a duplex paper machine may be used enabling the formation of the tear enhancement layer 20 and the oxygen barrier layer 24, and additionally the on-line application, for instance by spraying and/or coating, of the first adhesion layer 22 and the second adhesion layer 26. Subsequently, the water vapor barrier layer 28 may be formed by applying a biopolymer film by lamination. The retention filter layer 30 is separately formed and loosely combined to the water vapor barrier layer 28 by sealing and/or mechanical point/linear bonding.

Fig. 3B shows a 5-layer non-woven fabric 10 comprising a tear enhancement layer 20, a first adhesion layer 22, an oxygen barrier layer 24, a second adhesion layer 26 and a retention filter layer 30. Thus, the 5-layer non-woven fabric 10 shown in Fig. 3B does not comprise a separate water vapor barrier layer. In this set-up, the oxygen barrier layer 24 may be provided with water-vapor barrier properties, for instance by means of an additive, such as a hydrophobicity agent. However, other measures for achieving a sufficient water vapor barrier, even though a separate water vapor barrier layer is omitted, are possible. In the embodiment shown in Fig. 3B all layers may be formed separately.

Fig. 3C shows a 5-layer non-woven fabric 10 comprising a tear enhancement layer 20, a first adhesion layer 22, an oxygen barrier layer 24, a second adhesion layer 26 and a retention filter layer 30. Thus, similar to the non-woven fabric 10 shown in Fig. 3B, a separate water vapor barrier layer has been omitted. However, similar to the non-woven fabric 10 shown in Fig. 3A and unlike the embodiment shown in Fig. 3B, the tear enhancement layer 20, the first adhesion layer 22, the oxygen barrier layer 24 and the second adhesion layer 26 are prepared by using for instance a duplex paper machine, whereas the retention filter layer 30 is separately formed and loosely combined to the second adhesion layer 28 by sealing and/or mechanical point/linear bonding.

Fig. 3D shows a 5-layer non-woven fabric 10 comprising a tear enhancement layer 20, a first adhesion layer 22, an oxygen barrier layer 24, a water vapor barrier layer 28 and a retention filter layer 30. Thus, the 5-layer non-woven fabric 10 shown in Fig. 3D does not comprise a separate second adhesion layer. The tear enhancement layer 20, the first adhesion layer 22 and the oxygen barrier layer 24 are prepared by using for instance a duplex paper machine, and the water vapor barrier layer 28 may be directly applied onto the oxygen barrier layer 24, for instance by direct extrusion of a biopolymer film constituting the water vapor barrier layer 28. Subsequently, the retention filter layer 30 is loosely combined to the water vapor barrier layer 28 by sealing and/or mechanical point/linear bonding.

Fig. 3E shows a 4-layer non-woven fabric 10 comprising a tear enhancement layer 20, a first adhesion layer 22, an oxygen barrier layer 24 and a retention filter layer 30. Thus, the 4-layer non-woven fabric 10 shown in Fig. 3D does neither comprise a separate second adhesion layer nor a separate water vapor barrier layer. Rather, the adhesion function may be implemented in the oxygen barrier layer 24 and/or in the retention filter layer 30 by means of biobased polymer fibers, in particular thermoplastic biodegradable fibers. The tear enhancement layer 20, the first adhesion layer 22 and the oxygen barrier layer 24 are prepared by using for instance a duplex paper machine, and the retention filter layer 30 is loosely combined to the oxygen barrier layer 24 by sealing and/or mechanical point/linear bonding.

While the present invention has been described in detail by way of specific embodiments and examples, the invention is not limited thereto and various alterations and modifications are possible, without departing from the scope of the invention.

## Claims

1. A non-woven fabric (10) comprising:
a tear enhancement layer (20);
an oxygen barrier layer (24);
a retention filter layer (30),
wherein the oxygen barrier layer (24) is arranged between the tear enhancement layer (20) and the retention filter layer (30);
the non-woven fabric (10) further comprising at least one of a first adhesion layer (22), a second adhesion layer (26) and a water vapor barrier layer (28),
wherein the first adhesion layer (22) is arranged between the tear enhancement layer (20) and the oxygen barrier layer (24),
wherein the second adhesion layer (26) is arranged between the oxygen barrier layer (24) and the retention filter layer (30),
wherein the water vapor barrier layer (28) is arranged between the oxygen barrier layer (24) and the retention filter layer (30).

2. The non-woven fabric according to claim 1, wherein the tear enhancement layer (20) comprises fibers selected from the group consisting of pulp fibers, in particular wood pulp fibers or specialty pulp fibers; cellulosic fibers, in particular regenerated cellulose fibers; and biobased polymer fibers.

3. The non-woven fabric according to claim 1 or claim 2, wherein the tear enhancement layer (20) comprises fibers selected from the group consisting of softwood pulp fibers, specialty pulp fibers, and regenerated cellulose fibers.

4. The non-woven fabric according to any of the preceding claims, wherein the oxygen barrier layer (24) comprises fibers, in particular wood pulp fibers, in particular highly refined natural fibers.

5. The non-woven fabric according to claim 4, wherein the oxygen barrier layer (24) further comprises an additive, in particular a wet-strength agent and/or a hydrophobicity agent.

6. The non-woven fabric according to any of the preceding claims, wherein the oxygen barrier layer (24) comprises a coating comprising micro fibrillated cellulose (MFC), in particular wherein the MFC is crosslinked by a crosslinker, such as a wet-strength agent and/or citric acid.

7. The non-woven fabric according to any of the preceding claims, wherein the retention filter layer (30) comprises fibers selected from the group consisting of pulp fibers, in particular wood pulp fibers or specialty pulp; cellulosic fibers, in particular regenerated cellulose fibers; and biobased polymer fibers.

8. The non-woven fabric according to any of the preceding claims, wherein the retention filter layer (30) comprises fibers having a freeness value of from 20 to 40 °SR.

9. The non-woven fabric according to any of the preceding claims, wherein the first adhesion layer (22) and/or the second adhesion layer (26) comprises a biopolymer.

10. The non-woven fabric according to claim 9, wherein the biopolymer is selected from the group consisting of polyhydroxyalkanoate (PHA), polybutylene adipate terephthalate (PBAT), polycaprolactone (PCL), polylactic acid (PLA), thermoplastic starch (TPS) or any blend thereof.

11. The non-woven fabric according to claim 9 or claim 10, wherein the first adhesion layer (22) and/or the second adhesion layer (26) further comprises fibers, in particular highly refined natural fibers and/or micro fibrillated cellulose (MFC).

12. The non-woven fabric according to any of the preceding claims, wherein the water vapor barrier layer (28) comprises a biopolymer film, in particular wherein the biopolymer is selected from the group consisting of polyhydroxyalkanoate (PHA), polybutylene adipate terephthalate (PBAT), polycaprolactone (PCL), polylactic acid (PLA), thermoplastic starch (TPS) or any blend thereof.

13. The non-woven fabric according to any of the preceding claims, wherein at least one of the following is fulfilled:
the tear enhancement layer (20) has a basis weight in a range of from 15 to 50 g/m²,
the first adhesion layer (22) has a basis weight in a range of from 2 to 15 g/mz,
the oxygen barrier layer (24) has a basis weight in a range of from 20 to 80 g/m²,
the second adhesion layer (26) has a basis weight in a range of from 2 to 15 g/m²,
the water vapor barrier layer (28) has a basis weight in a range of from 10 to 50 g/m²,
the retention filter layer (30) has a basis weight in a range of from 5 to 50 g/m².

14. A lid for a capsule for preparing a beverage, in particular coffee or tea, the lid comprising or consisting of a non-woven fabric according to any of the preceding claims.

15. A capsule for preparing a beverage, in particular coffee or tea, the capsule (20) comprising:
a capsule main body comprising a bottom and a side wall; and
a lid according to claim 14,
wherein the lid closes an opening of the capsule main body.
